# EUROPÄISCHE PATENTSCHRIFT

(11) **EP 2 074 560 B1**
(45) Veröffentlichungstag und Bekanntmachung des Hinweises auf die Patenterteilung: **05.10.2011**
(21) Anmeldenummer: 08785744.7
(22) Anmeldetag: 28.08.2008
(51) Int. Cl.: G06K 19/077

(54) **VERFAHREN ZUR HERSTELLUNG EINES TRANSPONDERINLAYS FÜR EIN PERSONALDOKUMENT**
METHOD FOR THE PRODUCTION OF A TRANSPONDER INLAY FOR A PERSONAL DOCUMENT
PROCÉDÉ DE FABRICATION POUR UN INSERT TRANSPONDEUR POUR UN DOCUMENT PERSONNEL

(30) Priorität: 05.10.2007 US 867804
(43) Veröffentlichungstag der Anmeldung: 01.07.2009
(73) Patentinhaber: Smartrac IP B.V., 1077 XX Amsterdam (NL)
(72) Erfinder: RIETZLER, Manfred, D-87616 Marktoberdorf (DE)
(74) Vertreter: Tappe, Hartmut
(86) Internationale Anmeldenummer: PCT/EP2008/007049
(87) Internationale Veröffentlichungsnummer: WO 2009/046791

(56) Entgegenhaltungen:
- WO-A-2005/073907
- WO-A1-88/08171
- WO-A1-88/08171
- DE-A1- 4 241 482
- DE-A1- 4 241 482
- US-A- 4 625 102
- US-A1- 2007 141 760

## Beschreibung

Die vorliegende Erfindung betrifft ein Verfahren zur Herstellung eines Transponderinlays gemäß dem Oberbegriff des Anspruchs 1.

Die aktuelle Entwicklung im Bereich personaler Dokumente geht dahin, die konventionell zum Einsatz kommenden Dokumente zur Personenidentifikation mit Transpondern zu ergänzen, die ein berührungsloses, automatisiertes Auslesen der auf einem Chip des Transponders gespeicherten Daten ermöglichen. Derartige Transponder umfassen neben dem Chip eine Antennenspule, die den berührungslosen Datenzugriff ermöglicht.

Die Integration oder Implementierung solcher Transponder in konventionelle Personaldokumente, die aufgenommen in einem Dokumenteneinband eine Vielzahl von Papierseiten enthalten, stellt besondere Anforderungen an das Design der Transpondereinheiten bzw. der so genannten Transponderinlays, die auf einer Substratlage die Transpondereinheit aufweisen. Es liegt auf der Hand, dass es als wünschenswert angesehen wird, durch die Implementierung eines derartigen Tranpsonderinlays in ein Passdokument das bekannte Format der Passdokumente möglichst wenig zu beeinträchtigen. Darüber hinaus soll auch die Handhabung der Passdokumente, also beispielsweise das Blättern in solchen Dokumenten, möglichst wenig beeinflusst werden. Andererseits ergeben sich natürlich aus der Handhabung der Passdokumente wiederum besondere mechanische Belastungen für die Transponderinlays bzw. für die auf den Substratlagen der Transponderinlays angeordneten Transpondereinheiten.

Aus den vorgenannten Gründen geht man daher davon aus, dass es besonders darauf ankommt, die für die Implementation in Passdokumente bestimmte Transponderinlays möglichst dünn auszuführen. Dabei sind der Reduzierung der Dicke der für die Transponderinlays verwendeten Substratlagen allein schon durch die Dicke der Chipmodule Grenzen gesetzt, wenn man davon ausgeht, dass die Chipmodule im Wesentlichen oberflächenbündig in den Transponderinlays aufgenommen werden sollen.

Ein wesentlicher Aufwand bei der Herstellung ist daher mit der Ausbildung geeigneter Ausnehmungen oder Fensteröffnungen in den Substratlagen verbunden.

Aus der US 2007/0141760 A1 ist ein Verfahren ersichtlich, bei dem die Öffnung zur Aufnahme eines Chipmoduls entweder durch Einpressen des Chipmoduls in das Kunststoffsubstrat oder durch vorherige Ausbildung einer geeigneten Öffnung durch Verwendung einer mit Druck und Temperatur auf das Substrat wirkenden Vorrichtung erzeugt wird.

Die US 4.625.102 zeigt ein Verfahren zur Anordnung eines Chipmoduls in einem Kunststoffsubstrat, bei dem das Chipmodul in das Kunststoffsubstrat eingedrückt wird. Dabei kommt im Ergebnis eine mit einem Randabsatz versehene Fensteröffnung zustande, dadurch, dass bereits zuvor, also vor dem Einpressen des Chipmoduls in das Kunststoffsubstrat, eine als Fensteröffnung ausgebildete Durchgangsöffnung in das Kunststoffsubstrat eingebracht wurde.

Die WO 88/08171 offenbart ein Verfahren, bei dem ein Kunststoffsubstrat mit einer Ausnehmung zur Aufnahme eines Chipmoduls versehen wird, wobei zur Herstellung der Aufnahme ein beheizbares Stempelwerkzeug verwendet wird, das als Negativ der Aufnahme ausgebildet ist. Das Stempelwerkzeug wird unter Einwirkung von Druck und Temperatur in das Kunststoffmaterial eingepresst, das vor dem Einpressen auf Fließtemperatur aufgeheizt wird, so dass anschließend infolge der Druckbeaufschlagung des Kunststoffmaterials zur Ausbildung der Aufnahme eine Verdrängung des Kunststoffmaterials entsprechend dem in das Kunststoffmaterial eindringenden Werkzeugvolumen erfolgt.

Die DE 4241482 A1 zeigt ein Verfahren zur Herstellung einer Transponderkarte, bei dem ein Stempelwerkzeug zur Formung einer mit einem Randabsatz versehenen Fensteröffnung verwendet wird. Bereits vor Einsatz des Stempelwerkzeugs wird ein Sackloch vermittels eines Fräsers in das Kunststoffmaterial eingebracht. Dieses Sackloch ist so dimensioniert, dass es die Aufnahme eines bei Herstellung des Randabsatzes durch Einwirkung des Stempelwerkzeugs verdrängten Materials ermöglicht.

Der vorliegenden Erfindung liegt daher die Aufgabe zugrunde, ein Verfahren zur Herstellung eines Transponderinlays vorzuschlagen, dass die Herstellung möglichst dünn ausgebildeter Transponderinlays mit einem vergleichsweise geringen Aufwand ermöglicht.

Diese Aufgabe wird durch ein Verfahren mit den Merkmalen des Anspruchs 1 gelöst.

Erfindungsgemäß wird zur Ausbildung einer das Chipmodul aufnehmenden Fensteröffnung eine Durchgangsöffnung in der Substratlage hergestellt, und der Umfangsrand der Durchgangsöffnung wird zur Erzielung eines komprimierten Randabsatzes mit reduzierter Dicke mit Druck und Temperatur beaufschlagt.

Weiterhin erfolgt erfindungsgemäß die Beaufschlagung mit Druck und Temperatur vermittels eines ultraschallerregten Stempelwerkzeugs erfolgt. Die Temperaturbeaufschlagung kann dabei durch eine externe Beheizung des Stempelwerkzeugs erfolgen, oder auch durch eine durch die mechanische Reibung in Folge der Ultraschallschwingungen des Stempelwerkzeugs induzierte Erwärmung des Stempelwerkzeugs bzw. der Substratlage, also ohne externe Überheizung.

Weiterhin wird erfindungsgemäß das Stempelwerkzeug gleichzeitig zur Ausbildung der Durchgangsöffnung verwendet, da somit sowohl die Ausbildung der Fensteröffnung als auch die Ausbildung des Randabsatzes in einem Bearbeitungsvorgang mit ein und demselben Werkzeug erfolgen kann.

Eine hinsichtlich des universellen Werkzeugeinsatzes optimierte Variante des Verfahrens wird möglich, wenn das Stempelwerkzeug gleichzeitig zur Einbettung eines zur Herstellung der Antennenspule verwendeten Drahtleiters in die Kontaktoberfläche der Substratlage dient.

Eine bevorzugte Ausführungsform des Transponderinlays wird zusammen mit einer Erläuterung der mit der Herstellung des Transponderinlays verbundenen Verfahrensschritte anhand der Zeichnung verdeutlicht.

Es zeigen:
**Fig. 1** eine Nutzenanordnung mit drei zusammenhängend ausgebildeten Transponderinlays;
**Fig. 2** eine Fensteröffnung einer Substratlage in vergrößerter Darstellung gemäß Schnittlinienverlauf II-II in **Fig. 1****;**
**Fig. 3** die in **Fig. 2** dargestellte Fensteröffnung in Draufsicht;
**Fig. 4** eine Nutzenanordnung mit drei zusammenhängend ausgebildeten Einbandseiten zur Herstellung eines Lagenaufbaus für ein Passdokument;
**Fig. 5** eine Teilschnittdarstellung des in **Fig. 4** dargestellten Lagenaufbaus gemäß Schnittlinienverlauf V-V in **Fig. 4****;**
**Fig. 6** eine umgefalzte Einbandseite zur Ausbildung eines Einbandrückens.

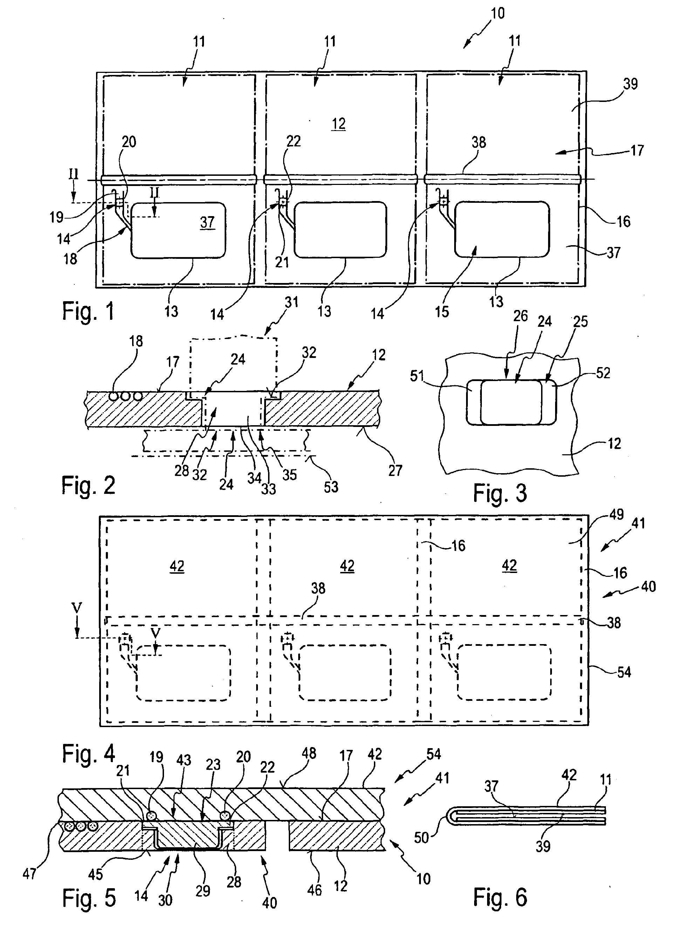

**Fig. 1** zeigt in einer Nutzenanordnung 10 drei miteinander zusammenhängend ausgebildete Transponderinlays 11, die jeweils eine Substratlage 12 mit einer darauf angeordneten, eine Antennenspule 13 und ein Chipmodul 14 umfassenden Transpondereinheit 15 aufweisen. In **Fig. 1** sind darüber hinaus Trennlinien 16 eingezeichnet, längs derer eine Vereinzelung der Transponderinlays 11 aus der Nutzenanordnung erfolgen kann.

Die Darstellung gemäß **Fig. 1** zeigt die Transponderinlays 11 in einer Draufsicht mit einer nach oben gewandten Kontaktoberfläche 17, auf der, wie auch in **Fig. 2** dargestellt, ein Drahtleiter 18 spulenförmig angeordnet und in die Kontaktoberfläche 17 eingebettet ist. Wie insbesondere **Fig. 5** zeigt, sind freie Drahtleiterenden 19, 20 mit Kontaktflächen 21, 22 eines in der Kontaktoberfläche 17 der Substratlage 12 angeordneten Chipträgers 23 des Chipmoduls 14 kontaktiert.

Das Chipmodul 14 befindet sich in einer in den **Fig. 2** und **3** dargestellten Fensteröffnung 30. Aus Gründen der übersichtlichen Darstellung der Fensteröffnung 30 ist in den **Fig. 2** und **3** abweichend von der Darstellung in **Fig. 1** das in die Fensteröffnung 30 eingesetzte Chipmodul 14 weggelassen. Die Fensteröffnung 30 ist abgestuft ausgebildet und weist einen der Kontaktoberfläche 17 zugewandten Randabsatz 24 auf, der zur Aufnahme des Chipträgers 23 dient **(****Fig. 5****)** und, wie **Fig. 3** zeigt, einen Aufnahmequerschnitt 25 aufweist, der größer ausgebildet ist als ein Aufnahmequerschnitt 26 einer sich zu einer Unterseite 27 der Substratlage 12 hin erstreckenden Durchgangsöffnung 28, die zur Aufnahme eines Chipgehäuses 29 des Chipmoduls 14 dient **(****Fig. 5****).**

Sowohl die Durchgangsöffnung 28 als auch der Randabsatz 24 sind dem jeweilig aufzunehmenden Chipmodul angepasst. Bei dem im vorliegenden Ausführungsbeispiel verwendeten Chipmodul 14 handelt es sich um ein Chipmodul 14 mit einem Chipträger 23, der lediglich in einer Dimension größer ausgebildet ist als das Chipgehäuse 29. Daher ist in dem hier dargestellten Ausführungsbeispiel der Randabsatz 24 so ausgebildet, dass der Randabsatz 24 lediglich an zwei einander gegenüberliegenden Randabschnitten Stützflächen 51, 52 für den Chipträger 23 bildet **(****Fig. 3****).**

Zur Herstellung der in den **Fig. 2** und 3 dargestellten Fensteröffnung 30 kann beispielsweise ein Stempelwerkzeug 31 zum Einsatz kommen, das eine durch einen Stempelbund 32 begrenzte Stempelspitze 33 aufweist. Die Stempelspitze 33 weist einen der Durchgangsöffnung 28 entsprechenden Querschnitt und der Stempelbund 32 einen dem Randabsatz 24 entsprechenden Querschnitt auf. Darüber hinaus ist die Stempelspitze 33 am Rand ihrer Stirnfläche 34 mit einer umlaufend ausgebildeten Schneidkante 35 versehen.

Zur Herstellung der in den **Fig. 2** und **3** dargestellten Fensteröffnung 30 kann das Stempelwerkzeug 31 unter zwischenliegender Anordnung der Substratlage 12 gegen eine Auflagefläche 53 verfahren werden, so dass im Wesentlichen basierend auf einem Stanzvorgang die Durchgangsöffnung 28 durch die Einwirkung der Schneidkante 35 auf die Substratlage 12 erzeugt wird. Gleichzeitig mit einer Vorschubbewegung 36 des Stempelwerkzeugs 31 kann diese Vorschubbewegung 36 mit Ultraschallschwingungen in Richtung der Vorschubbewegung oder auch quer dazu beaufschlagt werden, so dass durch die Relativbewegung zwischen dem Stempelbund 32 und der Kontaktoberfläche 17 der Substratlage 12 eine relative Erwärmung der Substratlage 12 erfolgt. In Folge dieser Erwärmung wird die durch die Vorschubbewegung 36 erfolgte Komprimierung der Substratlage 12 irreversibel, also quasi eingefroren. Wenn es sich bei dem für die Substratlage 12 ausgewählten Material um ein thermoelastisches Material handelt, bleibt trotz der thermischen Belastung des Materials eine gewisse Elastizität im komprimierten Bereich des Randabsatzes 24 erhalten. Grundsätzlich ist es jedoch auch möglich, eine Fensteröffnung in der in den **Fig. 2** und 3 dargestellten Art in einem thermoplastischen Material herzustellen.

Die in **Fig. 1** dargestellten Transponderinlays 11 der Nutzenanordnung 10 sind doppelseitig ausgebildet mit einer Transponderseite 37, auf der sich jeweils die Transpondereinheit 15 befindet, und mit einer Leerseite 39, die durch eine Falzausnehmung von der Transponderseite 37abgeteilt und flächengleich mit der Transponderseite 37 der Substratlage 12 ist.

In den **Fig. 4** und **5** ist ein Lagenaufbau 40 mit in einer Nutzenanordnung 41 zusammenhängend miteinander ausgebildeten Einbandseiten 49 dargestellt. Die Nutzenanordnung 41 besteht aus der in **Fig. 1** dargestellten Nutzenanordnung 10 mit den Transponderinlays 11 und einer auf der Kontaktoberfläche 17 angeordneten Nutzenanordnung 54 mit im Verbund angeordneten Decklagen 42. **Fig. 5** zeigt in einer Teilschnittdarstellung den Lagenaufbau 40 der Nutzenanordnung 41 bzw. einer darin ausgebildeten Einbandseite 49 in vergrößerter Darstellung. Insbesondere ist zu erkennen, dass das Chipmodul 14 so in der Fensteröffnung 30 der Substratlage 12 angeordnet ist, dass eine Kontaktseite 43 des Chipträgers 23 im Wesentlichen flächenbündig mit der Kontaktoberfläche 17 der Substratlage 12 ist. Das sich nach unten vom Chipträger 23 erstreckende, eine hier nicht näher dargestellte Chipeinheit einhüllende Chipgehäuse 29 ist vollständig in der Durchgangsöffnung 28 der Fensteröffnung 30 aufgenommen. Eine Gehäuseoberseite 45 befindet sich dabei leicht nach innen in die Fensteröffnung 30 zurückversetzt oder im Wesentlichen bündig mit einer Unterseite 46 der Substratlage 12 angeordnet. Bei dem in **Fig. 5** dargestellten Ausführungsbeispiel ist der Chipträger 23 mit den Stützflächen 51, 52 des Randabsatzes 24 verklebt.

**Fig. 5** zeigt ferner, dass zwischen der Decklage 42 und der Kontaktoberfläche 17 der Substratlage 12 bzw. des Transponderinlays 11 eine die Decklage 42 und das Transponderinlay 11 zu einem fixierten Lagenaufbau 40 verbindende adhäsive Zwischenschicht 47 angeordnet ist. Die mit den Kontaktflächen 21, 22 des Chipträgers 23 kontaktierten Drahtleiterenden 19, 20 der Antennenspule 13 befinden sich zu einem wesentlichen Teil in der Zwischenschicht 47 aufgenommen, so dass auch bei einer unelastischen Ausbildung der Decklage 42 eine Abbildung der Drahtleiterenden 19, 20 in einer Außen- oder Sichtseite 48 der Decklage 42 nicht zu befürchten steht.

Durch den in **Fig. 5** dargestellten Lagenaufbau 40 werden die in der Nutzenanordnung 54 gemäß **Fig. 4** in einem zusammenhängenden Verbund angeordneten Einbandseiten 49 gebildet, die durch einen Ausstanzvorgang längs der Trennlinien 16 vereinzelt werden können. Da sich die Decklagen 42 kontinuierlich über die Falzausnehmung 38 in der Substratlage 12 bzw. dem Transponderinlay 11 hinweg erstrecken, weisen die Einbandseiten 49 im Bereich der Falzausnehmungen 38 eine entsprechende Querschnittsreduzierung auf, die ein Umschlagen oder eine Falzung der Einbandseiten 49 um den durch die Falzausnehmung 38 definierten Einbandrücken 50, wie in Fig. 6 dargestellt, ermöglicht. In einem durch die Leerseite 39 und die Transponderseite 37 des Transponderinlays 11 begrenzten Einlegeraum können nun beliebige Zwischenseiten eingefügt werden, die in konventioneller Art und Weise Personendaten enthalten.

## Patentansprüche

1. Verfahren zur Herstellung eines Transponderinlays (11) für einen Lagenaufbau (40) eines Personaldokuments, wobei eine Substratlage (12) mit einer Antennenspule und einem Chipmodul sowie einer Fensteröffnung versehen wird und die Substrattage (12) eine Kontaktoberfläche (17 aufweist, auf der ein Chipträger des Chipmoduls mit der Antennenspule kontaktiert ist, ,
**dadurch gekennzeichnet,**
**dass** zur Ausbildung einer die Aufnahme des Chipmoduls ermöglichenden Fensteröffnung (30), die einen komprimierten Randabsatz (24) aufweist, eine Durchgangsöffnung (28) in der Substratlage (12) hergestellt und der Umfangsrand der Durchgangsöffnung zur Erzielung einer im Bereich des Umfangsrands reduzierten Dicke der Substratlage mit Druck und Temperatur beaufschlagt wird, wobei die Beaufschlagung mit Druck und Temperatur vermittels eines ultraschallerregten Stempelwerkzeugs (31) erfolgt, und das Stempelwerkzeug (31) gleichzeitig zur Ausbildung der Durchgangsöffnung (28) dient.

2. Verfahren nach Anspruch 1,
**dadurch gekennzeichnet, dass** das Stempelwerkzeug (31) gleichzeitig zur Einbettung eines zur Herstellung der Antennenspule (13) verwendeten Drahtleiters (18) in die Kontaktoberfläche (17) der Substratlage (12) dient.

## Claims

1. A method for manufacturing a transponder inlay (11) for a layered structure (40) of a personal document, wherein a substrate layer (12) is provided with an antenna coil and a chip module as well as a window opening and the substrate layer (12) has a contact surface (17) on which a chip carrier of the chip module is contacted with the antenna coil,
**characterized in that**
to form a window opening (30) that enables accommodation of the chip module and has a compressed peripheral shoulder (24), a through-opening (28) is produced in the substrate layer (12), and the circumferential edge of the through-opening is subjected to pressure and temperature to achieve a reduced thickness of the substrate layer in the area of the circumferential edge, wherein the treatment with pressure and temperature is performed by means of an ultrasonically energized stamping tool (31) and the stamping tool (31) also serves at the same time to form the through-opening (28).

2. The method according to Claim 1,
**characterized in that**
the stamping tool (31) serves at the same time to embed a wire conductor (18) that is used to produce the antenna coil (13) into the contact surface (17) of the substrate layer (12).

## Revendications

1. Procédé de fabrication d'un insert transpondeur (11) pour une structure à couches (40) d'un document personnel, une couche de substrat (12) étant munie d'une bobine d'antenne et d'un module de puce ainsi que d'un orifice de fenêtre, la couche de substrat (12) présentant une surface de contact (17) sur laquelle un support de puce du module de puce est contacté avec la bobine d'antenne,
**caractérisé en ce que**
pour la formation d'un orifice de fenêtre (30) permettant le logement du module de puce et présentant un épaulement périphérique comprimé (24) un orifice de passage (28) est produit dans la couche de substrat (12), le bord périphérique de l'orifice de passage étant soumis à une pression et à une température afin d'obtenir une épaisseur réduite de la couche de substrat dans la zone du bord périphérique, l'application de pression et de température étant réalisée par l'intermédiaire d'un outil de poinçonnage (31) excité par ultrasons, l'outil de poinçonnage (31) servant en même temps pour la formation d'un orifice de passage (28).

2. Procédé selon la revendication 1,
**caractérisé en ce que**
l'outil de poinçonnage (31) sert en même temps pour l'encastrement d'un conducteur de fil (18) utilisé pour la formation de la bobine d'antenne (13) dans la surface de contact (17) de la couche de substrat (12).
